Europäisches Patentamt

European Patent Office

Office européen des brevets

(19)

(11) EP 0 308 932 B1

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(51) Int Cl.6: **G01C 11/02**

(21) Anmeldenummer: **88115594.9**

(22) Anmeldetag: **22.09.1988**

(54) **Verfahren und Vorrichtung zur Abtastung eines Objektes**

Method and device for scanning an object

Méthode et dispositif pour balayer un objet

(84) Benannte Vertragsstaaten:
**CH DE FR GB IT LI**

(30) Priorität: **22.09.1987 DE 3731845**
**10.12.1987 DE 3741864**
**08.09.1988 DE 3830577**

(43) Veröffentlichungstag der Anmeldung:
**29.03.1989 Patentblatt 1989/13**

(73) Patentinhaber: **Daimler-Benz Aerospace Aktiengesellschaft**
**D-81663 München (DE)**

(72) Erfinder: **Hofmann, Otto, Dr.**
**D-8011 Kirchstockach (DE)**

(56) Entgegenhaltungen:
**EP-A- 0 145 249**       **DE-C- 1 623 426**
**US-A- 2 967 211**       **US-A- 3 619 029**
**US-A- 3 864 513**

**Beschreibung**

Die Erfindung betrifft ein Verfahren und eine Vorrichtung zur Abtastung der Geländeoberfläche und anderer Objekte quer zur Flug- bzw. Bewegungsrichtung mit einer quer zur Abtastrichtung angeordneten Detektor-Reihe, die mehrere, gleich große Einzeldetektoren enthält. Dieser Bedarf entsteht besonderes für die militärische Aufklärung und für die Fernerkundung in zivilen Bereichen. Hierfür benützt man u. a. sogenannte mechanisch-optische Abtaster, deren Arbeitsprinzip allgemein bekannt ist (siehe z. B. Hofmann, O.: Bildgüte aktiver und passiver Abtaster, Bildmessung und Luftbildwesen 51, 1983, Heft 3, S. 103-117). Ein Detektor oder mehrere Detektoren, die in der Bildebene eines Objektives angeordnet sind, tasten das Gelände quer zur Flugrichtung zeilenweise ab. Die Abtastung erfolgt durch einen vor dem objektiv angeordneten optischen Ablenkmechanismus, etwa einen Drehspiegel. Durch die Vorwärtsbewegung des Trägers reiht sich quer zur Flugrichtung Zeile an Zeile, so daß ein Gelände- bzw. Objektstreifen abgetastet wird.

Ein wesentliches Problem dieses Verfahrens, besonders beim Tiefflug bzw. großen Bildwinkeln, besteht darin, daß sich entlang einer Abtastlinie die Entfernung vom Abtaster zur Geländeoberfläche bzw. zum Objekt stark verändert und infolgedessen auch die von den Detektoren erfaßte Objektpunktgröße, sofern Brennweite und Detektor konstant bleiben. Es entstehen dadurch die bekannten Überdeckungen mit wachsendem Bildwinkel, da die von einem Detektor abgetasteten Geländestreifen mit wachsendem Bildwinkel immer breiter werden.

Prinzipiell kann konstante Auflösung des Objektes bei wechselnder Objektentfernung durch eine Veränderung der Brennweite oder der Detektorgröße erreicht werden.

Eine bekannte und von der Firma Texas Instruments realisierte Lösung (siehe J.-M. Kaltenbach "Spezielles Verfahren zur Vermeidung von Geometriefehlern bei IRLS", Carl-Cranz-Gesellschaft, 47. Jahrgang S. 1.08, Nov. 1986) besteht darin, den Detektor aus einzelnen Teil-Detektoren zusammenzusetzen und entsprechend der Entfernung die Signale der einzelnen Teilstücke abzurufen. Es handelt sich hierbei um einen speziellen Detektor, dessen Teilstücke verschiedene Formen und Größen aufweisen und der bei einer Abtastung nur jeweils die Abtastung einer Zeile in Abtastrichtung erlaubt.

Der Erfindung liegt die Aufgabe zugrunde, ein Verfahren und eine Vorrichtung der in Rede stehenden Art anzugeben, mit denen über den gesamten Abastbereich konstante Auflösung erreicht wird, das überflogene Objekt lückenlos abgetastet werden kann und das Gesamtsystem flexibel an unterschiedliche Parameter, z. B. die Flughöhe, angepaßt werden kann.

Diese Aufgabe wird gemäß der Erfindung durch die kennzeichnenden Merkmale der Ansprüche 1 und 10 gelöst.

Demgemäß werden die Signale einzelner Detektoren so zusammengefaßt, daß über den gesamten Abtastbereich Objektpixel annähernd konstanter, von der Abtastentfernung unabhängiger Größe gebildet werden.

Die Objektpixel annähernd konstanter und von der Abtastentfernung unabhängiger Größe entsprechen hierbei auf Seiten des Objektes Flächen, deren Projektion in Richtung des Abtaststrahles in eine Ebene senkrecht zu dem Abtaststrahl Standardflächen B annähernd konstanter Größe ergeben, so daß diese Standardflächen stets senkrecht auf der Richtung des Abtaststrahles stehen.

Die angegebene Lösung erlaubt mit einer Reihe gleich großer Detektoren gleichzeitig die Abtastung mehrerer, paralleler Abtastzeilen bei annähernd entfernungsunabhängiger Objektpunktgröße (Pixelgröße). Die gleichzeitige Abtastung in quer zur Flugrichtung liegenden parallelen Spuren ist besonders dann erforderlich, wenn bei großer Fluggeschwindigkeit große gemometrische Auflösung, d. h. kleine Objektpixelgrößen, verlangt werden.

Im Prinzip besteht das Verfahren in einem sog. "Resampling" eines Pixelrasters, d. h., die Umwandlung eines ungleichen Pixelrasters in ein anderes, regelmäßiges.

Bei der größten Abtastentfernung $E_{max}$ entspricht die sog. "elementare Objektpixel-Größe D" der geforderten "konstanten Standard-Objekt-Pixelgröße B". Proportional mit abnehmender Entfernung E wird die elementare Pixelgröße D kleiner, und die Standard-Pixelgröße B wird jeweils durch optimale Zusammenfassung (Resampling) elementarer Pixel D gebildet.

Durch diese Zusammenfassung, d. h., die Mittelbildung mehrerer Elementarpixel D zu einem Standardpixel B, wird gleichzeitig das Signal-/Rauschverhältnis des Objekt-Standardpixels B verbessert.

Bei der Maximalentfernung $E_{max}$ entspricht, wie bereits ausgeführt, ein Elementarpixel D einem Standardpixel B, eine Verbesserung des Signal-/Rauschverhältnisses ist daher innerhalb einer Abtastung nicht möglich.

Nun ist aber gerade bei der Maximalentfernung $E_{max}$ das Signal-/Rauschverhältnis am kritischsten und es besteht der Bedarf, dieses auch dort zu verbessern.

Gemäß einer bevorzugten Ausführungsform der Erfindung wird dieses Ziel dadurch erreicht, daß die mit wachsender seitlicher Entfernung auftretende überdeckung benachbarter Abtaststreifen ausgenützt wird und die Signale mehrfach abgetasteter Geländepixel zusammengefaßt, d. h., integriert bzw. gemittelt werden.

Das erfindungsgemäße Verfahren benützt weitgehend digitale Signalverarbeitung. Die zu bildenden Objektpixel werden durch "Zusammenfassung" diskreter Signale durch einen "Resampling" - Prozeß erzeugt. Diese Vorgehensweise erfordert einen erheblichen digital-elektronischen Aufwand und führt zu diskontinuierlichen Sprüngen und damit zu gewissen Ungenauigkeiten. Auch die Anpassung des Verfahrens an veränderliche Flughöhen und Fluggeschwin-

EP 0 308 932 B1

digkeiten verlangt einen beträchtlichen Aufwand an digitalen Speichern und Steuerungen.

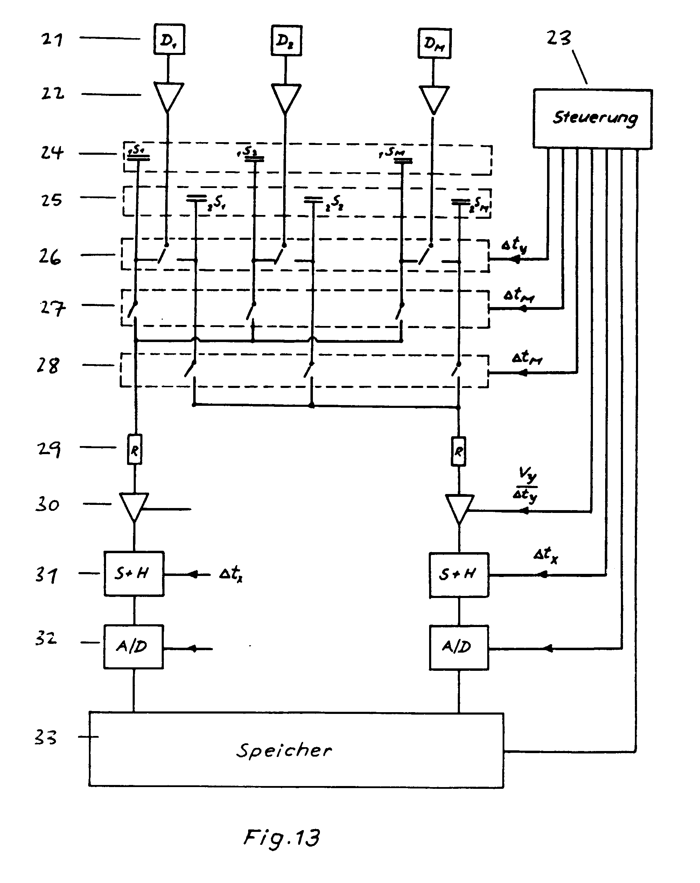

Eine wesentliche Verbesserung und Vereinfachung in dieser Hinsicht wird gemäß einer weiteren Ausführungsform dadurch erzielt, daß die Bildung der Objektpixelsignale durch eine digitale Steuerung der Abtastperioden $\Delta t_y$ der à priori analogen, parallelen Detektorsignale und deren Speicherung in (M) Speichern erfolgt, aus denen durch serielles Auslesen ein analoges zeilensignal s(t) gebildet wird, das in (n) konstanten Perioden $\Delta t_x$ abgetastet und daraus die endgültigen, den Objektpixeln (B) entsprechenden Signale gebildet werden, wobei die Abtastperioden $\Delta t_y$ und $\Delta t_x$ jeweils Funktionen der Abtastentfernung (E) bzw. der Flughöhe (h) und des Abtastwinkels ($\omega$) sind. An Hand der Fig. 13, 14 und 15 sind drei Ausführungsbeispiele erläutert.

Weitere Ausgestaltungen der Erfindung gehen aus den Unteransprüchen hervor.

Die Erfindung ist in Ausführungsbeispielen anhand der Zeichnung zu näher erläutert. In dieser stellen dar:

Fig. 1    eine schematische Darstellung einer herkömmlichen Abtastung einer Geländeoberfläche von einem Flugzeug aus;

Fig. 2    eine schematische Darstellung eines Geländestreifens mit herkömmlicher bzw. erfindungsgemäßer Abtastung;

Fig. 3    eine schematische Darstellung einer Abtastung eines Geländestreifens quer zur Flugrichtung eines Flugzeuges zur Erläuterung von für die Erfindung wichtigen Systemparametern;

Fig. 4    einen Streifen der durch die Abtastung erzeugten Objektpixel;

Fig. 5    eine schematische Darstellung des Abtastbereiches, mit der die Erzeugung gleich großer Objektpixel erläutert wird;

Fig. 6    eine Darstellung ähnlich wie in Fig. 3 zur Erläuterung der Erzeugung gleich großer Objektpixel;

Fig. 7    ein Blockschaltbild einer ersten Ausführungsform einer Vorrichtung gemäß der Erfindung zum Abtasten einer Geländeoberfläche;

Fig. 8    eine schematische Darstellung eines Abtastbereichs zur Erläuterung eines Abtastverfahrens mit verbessertem Signal-/Rauschverhältnis;

Fig. 9    ein Blockschaltbild einer zweiten Ausführungsform einer Vorrichtung gemäß der Erfindung zum Abtasten einer Geländeoberfläche mit verbessertem Signal-/Rauschverhältnis;

Fig. 10    ein Blockschaltbild eines in der Vorrichtung gemäß Fig. 9 verwendeten Integrationsprozessors;

Fig. 11    einen Querschnitt der Abtastebene;

Fig. 12    eine Abtastebene $E_{max}$, in die andere Abtastentfernungen E hinein gedreht sind, und in die auch die entsprechenden Abtastzeiten eingetragen sind;

Fig. 13    den prinzipiellen Aufbau der Signalverarbeitung mit analogen Speichern;

Fig. 14    den prinzipiellen Aufbau der Signalverarbeitung mit digitalen Speichern;

Fig. 15    den prinzipiellen Aufbau der Signalverarbeitung mit CCD- Speichern und ihrer Auslesung in Form von "Charge Coupled Devices" (CCD's);

Fig. 16    das Prinzip der Detektorsignalbildung durch Integration;

Fig. 17    Prinzip der Zeilensignalbildung und Abtastung.

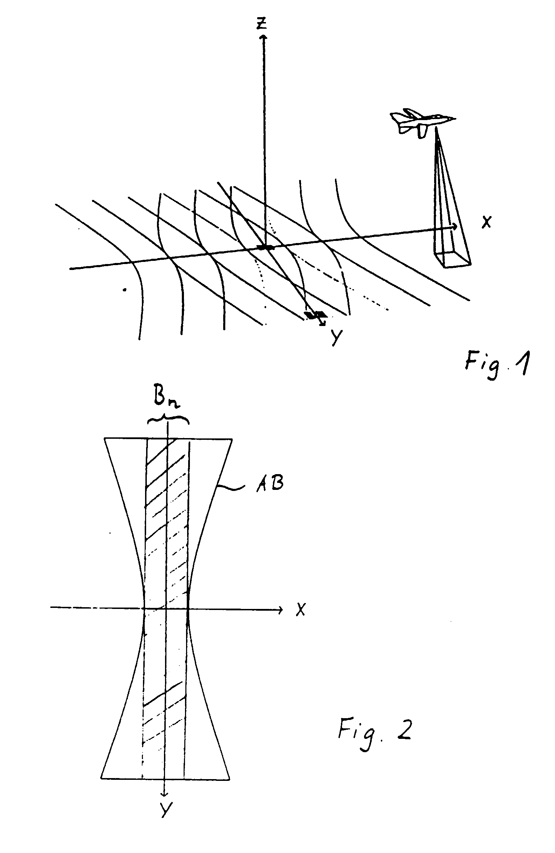

Bei einer herkömmlichen Abtastung eines Objektes, z. B. einer Geländeoberfläche von einem Flugzeug aus, zeigen die von einem Abtaster aufgenommenen Abtastbereiche eine in Fig. 2 mit AB bezeichnete Form. Die Abtastbereiche erstrecken sich senkrecht zur X-Achse, die parallel zur Flugrichtung liegt, in Y-richtung und verbreitern sich mit zunehmender Entfernung von der X-Achse. Die von den einzelnen Detektoren eines im Flugzeug angeordneten Abtasters aufgenommenen Geländebereiche variieren somit in ihrer Größe in Abhängigkeit der jeweiligen Entfernung zwischen Abtaster und betrachtetem Geländebereich. Die Ausgangssignale der Einzeldetektoren werden gemäß der Erfindung so verarbeitet, daß der Abtastbereich, wie schraffiert angedeutet, ein Rechteck mit der Breite $B_n$ wird und innerhalb dieses Abtastbereiches konstante Auflösung erreicht wird, d. h., daß der Abtastbereich in Objektpixel mit jeweils gleicher Pixelgröße unterteilt wird.

Es wird somit gefordert, daß die Objekt-Pixelgrößen, die jeweils normal zum Abtaststrahl stehen, annähernd entfernungsunabhängig sind.

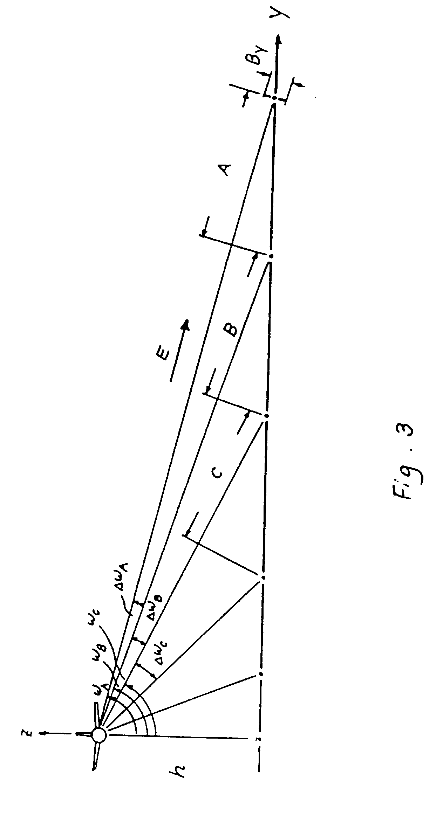

In der Bildebene des Abtasters sind rechtwinklig zur Abtastrichtung in einer Reihe nebeneinander eine Anzahl gleich großer Detektoren angeordnet. Das Abtaststrahlenbündel bewegt sich in einer Ebene, die normal zur Flugrichtung steht und etwa mit der Zeichenebene der Fig. 3 identisch ist.

Die Größe der Einzeldetektoren und die Brennweite des Abtasters sind in der Regel so bemessen, daß bei der größten Objekt-Entfernung (quer zur Flugrichtung) die geforderte Objekt-Pixelgröße von einem Detektor und einer Belichtungsperiode gedeckt wird. Die Detektorbreite d bestimmt die "elementare Objekt-Pixelgröße" $D_x$ in Flugrichtung, die elementare Objekt-Pixelhöhe $D_y$ in Abtastrichtung wird durch die Belichtungsperiode $\Delta t$ bestimmt. In der Regel wählt man $D_x$ und $D_y$ gleich groß. Es bestehen die einfachen Beziehungen:

$$D_X = \frac{E \cdot d}{F} \tag{1}$$

$$D_y = \overset{\circ}{\omega} \cdot E \cdot \Delta t \tag{2}$$

Darin bedeuten

E = Objektpunkt-Entfernung
F = Brennweite
d = Detektorbreite
$\overset{\circ}{\omega}$ = Abtast-Winkelgeschwindigkeit
$\Delta t$ = Belichtungsperiode (Belichtungsintervall eines elementaren Detektorsignals

Die Erfindung verfolgt nun das Ziel, daß bei einer Abtastung (Scan) n parallele, gleich große und in ihrer Zahl stets konstante Objektpixel erzeugt und in einem Bildspeicher abgelegt werden, d. h., daß eine Abtastung einen quer zur Flugrichtung liegenden Bildstreifen konstanter Breite bildet. Die Breite $B_n$ dieses Streifens (im Objekt) ist

$$B_n = n \, B_x \tag{3}$$

wobei $B_x$ die gewünschte Breite des Objektpixels darstellt.

Auch in Abtastrichtung Y sollen, unabhängig vom momentanen Bildwinkel, d. h. von der Abtastentfernung, etwa konstante Objekt-Pixelgrößen $B_y$ gebildet werden.

Bei einer Abtastung ändert sich die Objektentfernung ständig, und mit kürzer werdender Entfernung E schrumpft auch die Objekt-Pixelgröße gemäß (1) und (2).

Um diesen bekannten Effekt zu kompensieren, unterteilt man nun den gesamten Entfernungsbereich in mehrere Teilbereiche, innerhalb derer man jeweils Signale mehrerer benachbarter Detektoren und mehrere Belichtungsperioden so durch Mittelbildung zusammenfaßt, daß die zusammengefaßten elementaren Detektorsignale bzw. Belichtungsperioden jeweils optimal eine Fläche abdecken, die der vorgegebenen Objekt-Pixelgröße $B_x$ und $B_y$ entsprechen.

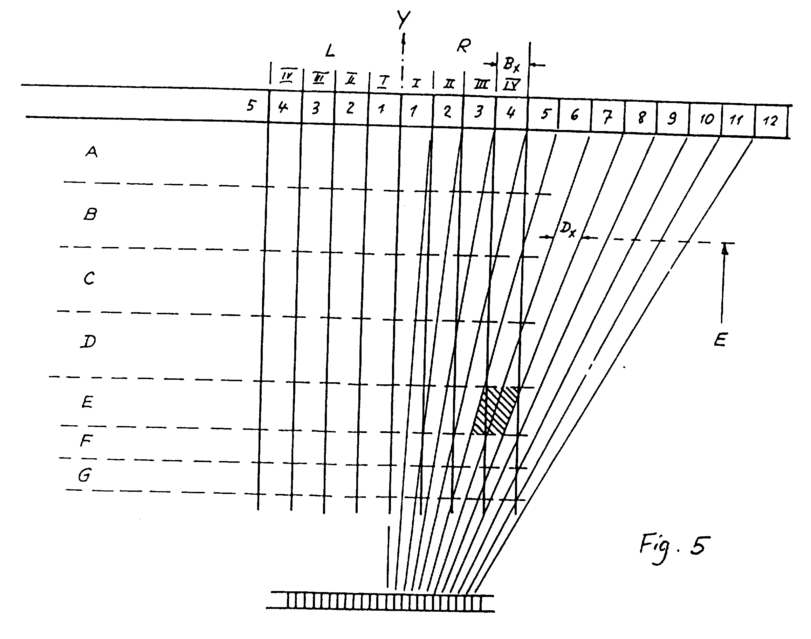

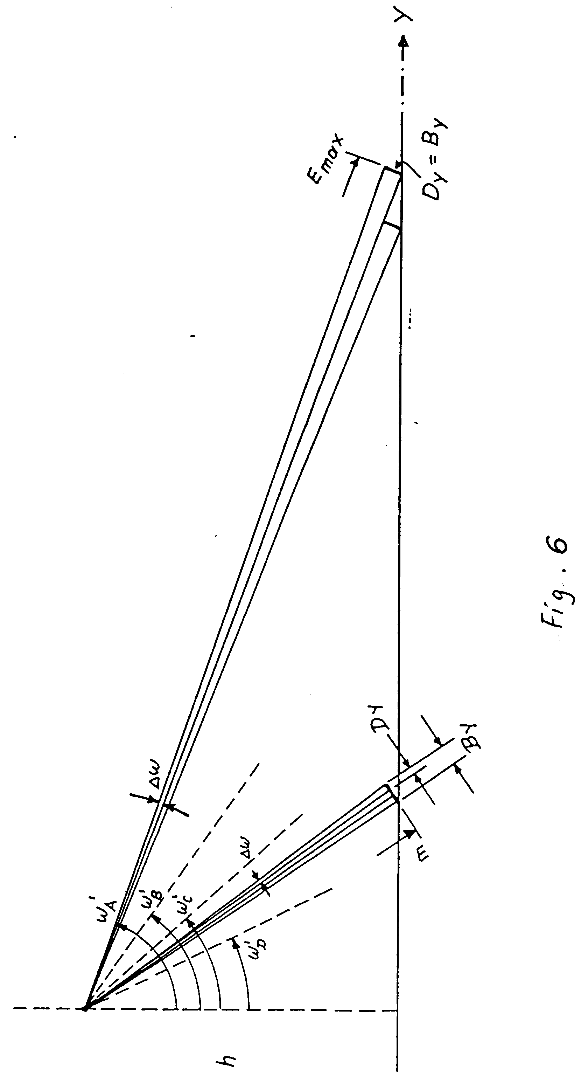

Anhand der Fig. 5 und 6 sei das an Beispielen deutlich gemacht. Dabei ist zu berücksichtigen, daß diese Abbildungen stark verzerrt sind. Die Entfernungen E in Y-Richtung sind im Verhältnis zu den Pixelausdehnungen D bzw. B sehr verkürzt dargestellt.

In Fig. 5 sei die Symmetrielinie der Abtastspur die Y-Achse. Die konstante Objekt-Pixelgröße ist $B_x$. Es werden links (L) und rechts (R) dieser Y-Achse jeweils 4 Bodenpixel I, II, III, IV gebildet. Die Detektoren links (L) und rechts (R) sind mit 1, 2, 3, 4 ... bezeichnet, die Entfernungsbereiche A, B, C, ...

Die Tabelle 1 gibt an, welche Detektorsignale innerhalb eines Entfernungsbereiches jeweils zusammengefaßt werden, um die Bodenpixelbreite $B_x$ zu erzeugen.

Tabelle 1

| m | I | II | III | IV |
|---|---|----|-----|-----|
| A | 1 | 2 | 3 | 4 |
| B | 1 | 2 | 3+4 | 5 |
| C | 1 | 2 | 4 | 5 |
| D | 1+2 | 3 | 4+5 | 6 |

Tabelle 1   (fortgesetzt)

| m | I | II | III | IV |
|---|---|----|-----|-----|
| E | 1+2 | 3+4 | 5+6 | 6+7 |
| F | 1+2 | 3+4 | 5+6 | 7+8 |
| G | 1+2 | 3+4+5 | 5+6+7 | 8+9 |

So werden z. B. im Entfernungsbereich E die Objektpixel Bx der Reihe IV durch Zusammenfassung der Elementar-Pixel Dx der Detektoren 6 und 7 erzeugt. In Fig. 5 ist dieser Bereich schraffiert.

In Abtastrichtung wird prinzipiell ebenso verfahren, auch hier werden die Signale aufeinanderfolgender Elementar-Belichtungsperioden $\Delta T$ bzw. Elementar-Winkelinkremente $\Delta\omega = \mathring{\omega}\cdot\Delta t$ zusammengefaßt und gemittelt, so daß auch in Y-Richtung über den gesamten Abtastbereich etwa gleich große Objektpixel By gebildet werden, wobei zu beachten ist, daß diese Objektpixel By jeweils senkrecht zum entsprechenden Abtaststrahl stehen. Die Fig. 6 erläutert diesen Vorgang, sie entspricht der Fig. 3.

Das elementare, einer Abtast- bzw. Taktperiode $\Delta t$ entsprechende Winkelinkrement ist $\Delta\omega = \mathring{\omega}\cdot\Delta t$, wobei $\mathring{\omega}$ die Abtastgeschwindigkeit darstellt; $\Delta\omega$ ist zumindest für eine Abtastung konstant. Für die größte Abtastentfernung $E_{max}$ entspricht ein Objektpixel $B_y$ einem Elementarpixel $D_y = E_{max}\cdot\Delta\omega$. Je kürzer die Entfernungen werden, desto mehr Winkelinkremente $\Delta\omega$ entfallen auf ein Objektpixel; in der Fig. 6 sind es beispielsweise bei der gezeichneten Entfernung E drei Elementpixel $D_y$ bzw. drei Winkelinkremente $\Delta\omega$, die zu einem Objektpixel $B_y$ zusammengefaßt sind.

Es lassen sich nun auch hier Winkelbereiche $\omega_A'$, $\omega_B'$ ... bzw. Entfernungsbereiche A', B' usw. (in Fig. 6 nicht dargestellt) bestimmen, innerhalb derer eine gleichbleibende Zahl von Abtastsignalen (die jeweils einem Takt bzw. Winkelinkrement entsprechen) zusammengefaßt und gemittelt werden.

Diese Bereiche können, aber müssen nicht identisch sein mit den Pixel-Bereichen A, B, C ... in X-Richtung. Da sich die Entfernungen bei einem Abtastzyklus kontinuierlich ändern, die Pixelzahlen jedoch nur in vollen Pixelzahlen, entstehen in den Grenzbereichen gewisse Ungenauigkeiten, wie sie bei einem Resampling-Prozess stets mehr oder weniger auftreten und analog hierzu auch aus der Fig. 5 ersichtlich sind.

Legt man beispielsweise eine derartige Abtastvorrichtung, wie bereits oben erwähnt, so aus, daß für die größte abzutastende Entfernung bzw. den größten Bildwinkel die elementaren Objekt-Pixelgrößen $D_x$ und $D_y$ den gewünschten, über den gesamten Abtastbereich annähernd konstanten, zusammengesetzten Objekt-Pixelgrößen $B_x$ und $B_y$ entsprechen, dann müssen für die kürzeste Entfernung $E_{min}$ zur Bildung eines Objektpixels $B_x$ gemäß der Gleichung (1) jeweils

$$m_x = \frac{B_x}{D_x} = \frac{B_x\cdot F}{E_{min}\cdot d} \tag{4}$$

Detektorsignale und gemäß Gl. (2)

$$m_y = \frac{B_y}{D_y} = \frac{B_y}{E_{min}\cdot\mathring{\omega}\cdot\Delta t} \tag{5}$$

Belichtungsperioden zusammengefaßt werden.

Dementsprechend muß die Detektorreihe mindestens

$$r = m_x\cdot n \tag{6}$$

Einzeldetektoren enthalten, wenn in sämtlichen Entfernungsbereichen die Objektpixel B jeweils vollständig durch Elementarpixel D abgedeckt sein sollen.

Die Entfernungsbereichsgrenzen A, B, C ... bzw. A′, B′, C′ ... können, aber müssen nicht, identisch sein.

Die Gesamtzahl S′ aller Objektpixel in Abtastrichtung ergibt sich aus der Summe der Objektpixelzahlen in den einzelnen Bereichen

$$p'_A + p'_B + p'_C ... = S' \tag{7}$$

Ein Abtaststreifen enthält somit die konstante Anzahl von

$$n \cdot S' \tag{8}$$

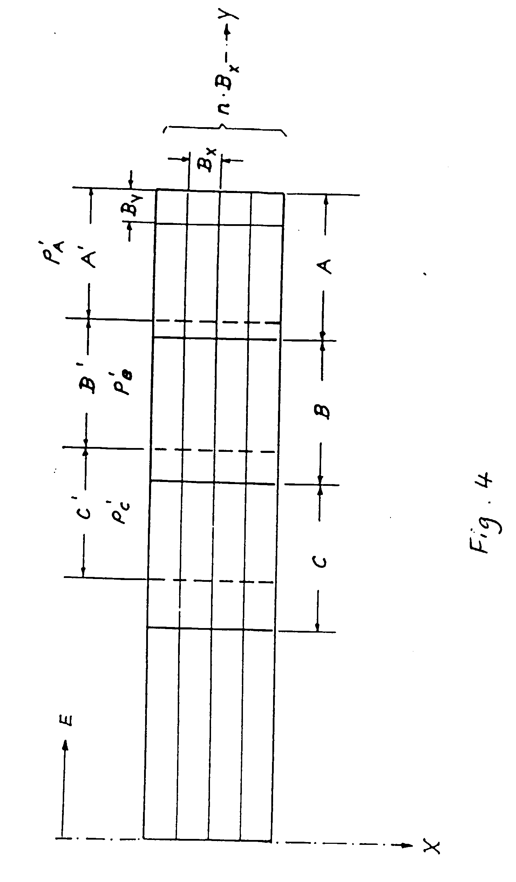

Objektpixeln (siehe Fig. 4).

Die Entfernungsbereiche A, B, C, ... bzw. A′, B′, C′, ... und die Objektpixelteilsummen $p'_A$, $p'_B$, $p'_C$ ... sind in der Regel unterschiedlich groß, sie hängen vom Bildwinkel und der Flughöhe ab.

Der von dem Abtaster erzeugte Gesamtbildstreifen setzt sich aus den lückenlos aufeinander folgenden, quer zur Flugrichtung liegenden Teilbildstreifen zusammen. Um diese lückenlose und überlappungsfreie Teilstreifenfolge zu erreichen, muß folgende Bedingung erfüllt sein:

$$v = F_A \cdot B_n \tag{9}$$

wobei

$v$ [m/s] = Fluggeschwindigkeit
$F_A$ [1/s] = Abtastfrequenz
$B_n$ [m] = Teilstreifenbreite

darstellen.

Das vorgeschlagene Funktionsprinzip läßt sich an optisch-mechanischen Abtastern der unterschiedlichsten Bauarten realisieren. Hierzu ist nur eine Detektorreihe mit gleich großen Einzeldetektoren quer zur Flugrichtung in der Bildebene des Abtast-Objektivs anzuordnen (siehe Gl. 6).

Die Parameter des Abtasters

Brennweite F
Detektorelementgröße d
Detektorzahl r
Zahl der Abtast-Spuren n
Abtastgeschwindigkeit $\overset{\circ}{\omega}$ (Winkelgeschwindigkeit)
Belichtungsperiode $\Delta t$
Entfernungsbereiche A, B, C ... A', B', C' usw.

ergeben sich aus den Flugparametern (Flughöhe h, Fluggeschwindigkeit v), dem Bildwinkel quer zur Flugrichtung und der geforderten Objekt-Pixelgröße B.

Den Entfernungsbereichen sind jeweils die entsprechenden Drehwinkelbereiche $\Delta \omega_A$, $\Delta \omega_B$, $\Delta \omega_C$ bzw. $\Delta \omega_{A'}$, $\Delta \omega_{B'}$, $\Delta \omega_{C'}$ zugeordnet (siehe Fig. 3). Sie lassen sich bei konstanter Drehgeschwindigkeit des Abtasters aus der Drehzeit für diese Winkel $t_A$, $t_B$, $t_C$ ... bzw. $t_{A'}$, $t_{B'}$, $t_{C'}$ ... in Bezug auf eine Referenzmarke (Index) ermitteln. Diese Referenzmarke kann in Abhängigkeit von der Rollage des Trägers variabel sein und jeweils die Lotlinie definieren. Für genauere Messungen können diese Drehwinkel von einem mit der Drehachse des Abtasters gekoppelten Winkelstellungsgeber abgegriffen werden.

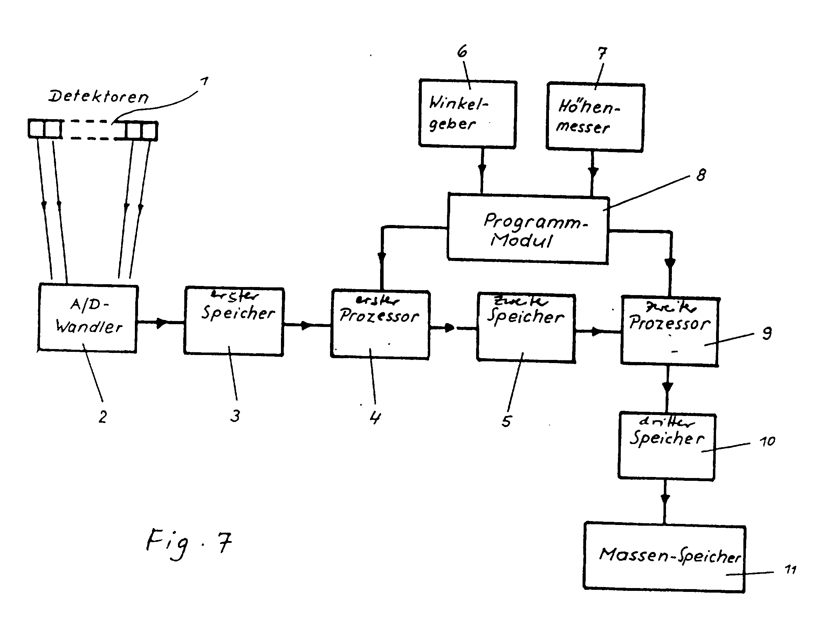

Die Detektorsignalverarbeitung und die Gesamtfunktion des Abtasters ist aus der Fig. 7 ersichtlich.

Die analogen, elementaren Detektorsignale von mehreren, in einer Zeile senkrecht zur Abtastrichtung angeordneten Detektoren 1 werden von einem A/D-Wandler 2 digitalisiert und in einem ersten Speicher 3 abgelegt. Jedes Detektorsignal wird durch eine Zahl, z. B. eine Binärzahl mit 8 Stellen (8 bit) dargestellt und entspricht einem Elementar-Pixel. Ein von einem Programm-Modul 8 gesteuerter erster Prozessor 4 entnimmt dem Speicher 3 die elementaren Detektorsignale einer Belichtungsperiode und faßt sie in Abhängigkeit von den Entfernungsbereichen A, B, C ... usw. jeweils zu einem Objekt-Pixel zusammen. Jedes dieser zusammengesetzten n Pixel entspricht einer Objektpixelbreite $B_x$.

Diese n Pixel werden einem zweiten Speicher 5 zugeführt, der die Pixel mehrerer Belichtungsperioden aufnehmen kann. Ein zweiter, ebenfalls vom Programm-Modul 8 gesteuerter Prozessor 9 faßt innerhalb jeder der n Pixelfolgen mehrere Belichtungsperioden in Abhängigkeit von den Entfernungsbereichen A′, B′, C′ ... zusammen und führt sie einem dritten Speicher 10 zu, der jeweils die Pixel eines Abtaststreifens aufnimmt. Die Y-Ausdehnung jedes zusammengesetzten Pixels entspricht nunmehr der Objekt-Pixelgröße $B_y$. Aus dem Speicher 10 können nunmehr die Pixel ausgelesen und in einem Massenspeicher 11, z. B. auf einem Magnetband, abgelegt werden.

Der Programm-Modul 8 wird von der Winkelstellung des Abtasters bzw. bon einem mit ihm verbundenen Winkelstellungsgeber 6 gesteuert, um jeweils die entsprechenden Entfernungsbereiche detektieren zu können.

Die optimalen Entfernungsmeßbereiche und Pixel-Kombinationen sind u. a. von der Flughöhe h über Grund abhängig. Man legt dahr für beliebig gestufte Höhenbereiche die optimalen Entfernungsbereiche und Pixel-Kombinationen in Tabellen fest und speichert diese im Programm-Modul 8, der von einem Höhenmesser 7 gesteuert ist.

Über diesen Programm-Modul 8 läßt sich auch die Objektpixelauflösung $B_x$, $B_y$ verändern, d. h., daß sich verschiedene Objekt-Pixelauflösungen einstellen bzw. programmieren lassen.

Dieses Verfahren und diese Vorrichtung weisen folgende Vorzüge auf:

1. Die Normal zum Abtaststrahl stehenden Objektpixel sind unabhängig von der Entfernung nahezu gleich groß.

2. Ein Abtaststreifen kann eine oder mehrere parallele Pixelreihen n enthalten.

3. Jeder Abtaststreifen enthält in X- und Y-Richtung stets eine konstante Zahl von objektpixeln, und die Streifenbreite B ist konstant.

4. Die Abtaststreifen können sich daher bei einer auf die Fluggeschwindigkeit abgestimmten Abtastgeschwindigkeit lückenlos und überdeckungsfrei aneinander ansschließen.

5. Als Detektoren können handelsübliche Detektorzeilen, auch integrierende Detektoren (z. B. TDI- oder Sprite-Detektoren) benützt werden. Die Zahl der Einzeldetektoren wird praktisch in der Größenordnung von 20 bis 200 liegen, des hängt von den jeweiligen Anforderungen ab.

6. Das Verfahren ist sehr flexibel. Durch entsprechende Programmierung kann die Objekt-Pixelgröße verändert und nahezu unabhängig von der Flughöhe gemacht werden. Diese Anpassung kann während des Fluges automatisch erfolgen.

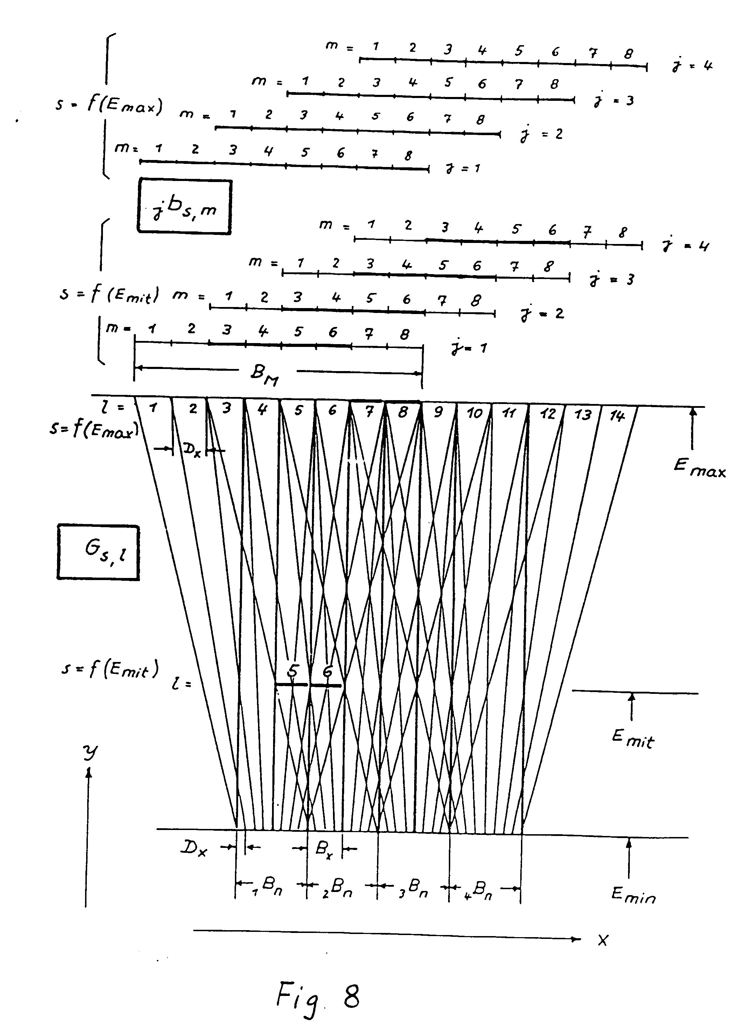

Anhand der Fig. 8 bis 10 wird ein erweitertes Abtastverfahren erläutert, mit dem das Signal-/Rauschverhältnis insbesondere für große Abtastentfernungen E verbessert werden kann.

Ein Abtaststreifen der Breite $B_n = n \cdot B_x$ besteht jeweils aus n (im Beispiel n = 2) Zeilen der Standardpixelbreite $B_x$, d. h.

$$B_n = 2 \cdot B_x \tag{1}$$

Bei der Minimalentfernung $E_{min}$ sind M Elementarpixel $D_x$ (im Beispiel M = 8) zu n = 2 Standardpixeln $B_x$ zusammengefaßt. Bei der Maximalentfernung ist $D_{max} = B_x$. Die Abtastbreite sämtlicher M Detektoren ist demzufolge für $E_{max}$

$$B_M = M \cdot B_x = M \cdot D_{max} \tag{2}$$

Während sich für $E_{min}$ die Abtaststreifen lückenlos und überdeckungsfrei aneinander reihen, überdecken sich mit wachsender Entfernung die sich trapezförmig ausweitenden Nachbarstreifen. Es werden daher jetzt bei einer Streifenabtastung nicht nur die Standardpixel $b_{s,m}$, die im Streifenbereich $B_n$ liegen, gebildet (in Fig. 8 m = 4,5), sondern soweit möglich und es das Signal-/Rauschverhältnis erfordert, ab einer bestimmten Entfernung, z. B. $E_{mit}$, bis zur Maximalentfernung $E_{max}$ auch die nach beiden Seiten überlappenden Standardpixel $b_{s,m}$ (m = 1 ... M) bis zu einer maximalen Streifenbreite $B_M = M \cdot B_x$.

Bei den in Fig. 8 dargestellten Verhältnissen entsteht bei der Maximalentfernung $E_{max}$ eine r = 4-fache Überdeckung bzw. Abtastung jedes Geländepixels (z. B. $G_{s,7}$ und $G_{s,8}$, wobei s = f($E_{max}$) mit f als Funktionszeichen).

Wie aus Fig. 8 ersichtlich, ist bei der Entfernung $E_{mit}$ die Überdeckung benachbarter Streifen geringer, für diese Entfernung können z. B. die Pixel $_jb_{s,1}$, $_jb_{s,2}$, $_jb_{s,7}$, $_jb_{s,8}$ nicht gebildet werden, und es ist nur eine doppelte Integration möglich. Es werden in diesem Fall nur die Pixel $_jb_{s,5} + _{j+1}b_{s,3}$ bzw. $_jb_{s,6} + _{j+1}b_{s,4}$ addiert. Der Reduktionsfaktor ist hier $1/r = 1/2$, er ist entfernungsabhängig, die Geländepixel $G_{s,5}$ und $G_{s,6}$ (s = f($E_{mit}$)) werden nur doppelt abgetastet.

Aus der Fig. 8 entnimmt man, daß sich die Pixel $_{j-1}b_{s,m}$ einer Abtastung j-1 jeweils den um n verschobenen Pixeln $_jb_{s,m}$ der nächsten Abtastung überlagern.

Zur Realisierung dieses Verfahrens sind daher die korrespondierenden Pixel benachbarter Abtaststreifen zweckmäßig digital zu speichern und sukzessiv zu integrieren.

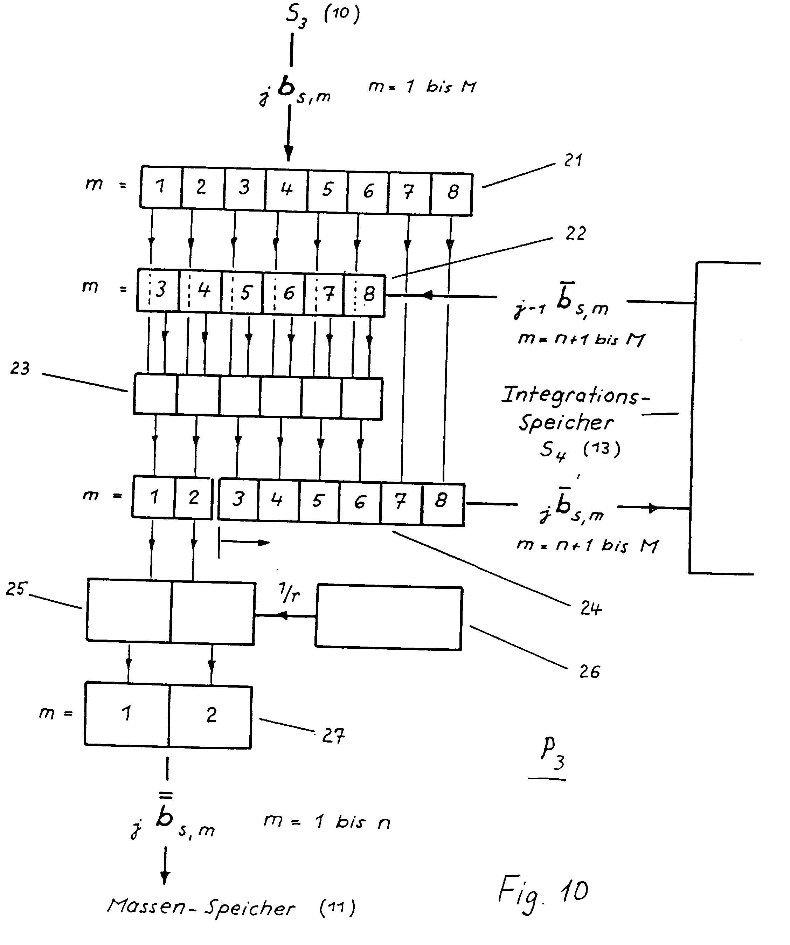

Fig. 10 zeigt ein prinzipielles Ausführungsbeispiel eines Integrationsprozessors P3 für diesen Integrationsprozess, wobei die Verhältnisse der Fig. 8 zugrundeliegen. Die Fig. 10 demonstriert lediglich das Arbeitsprinzip.

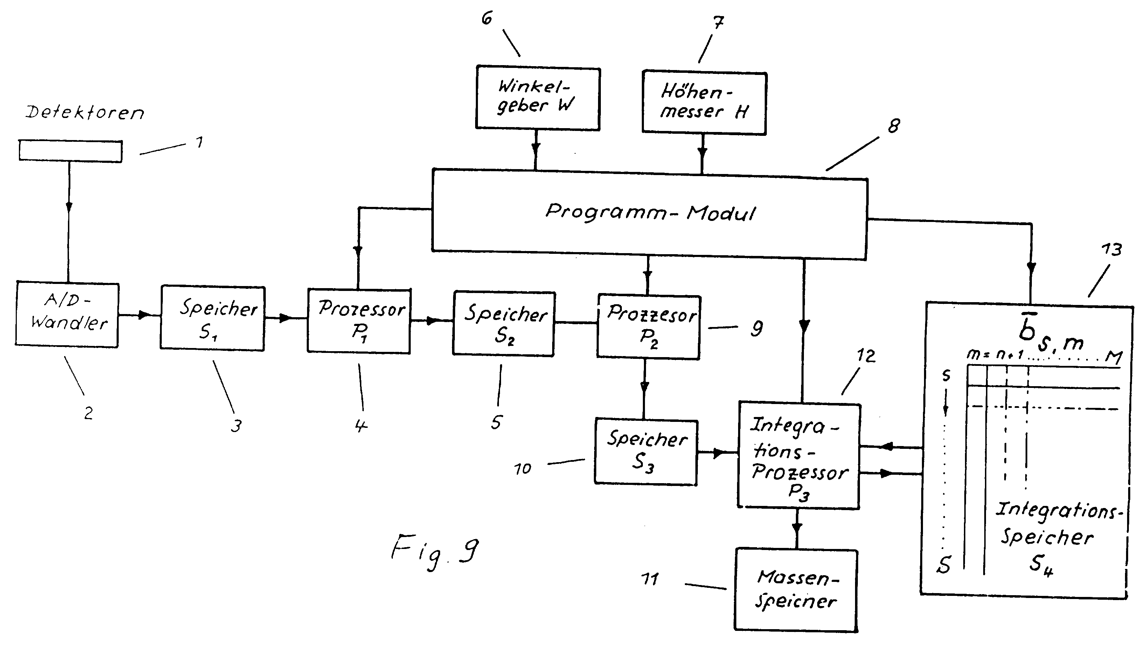

In Fig. 9 ist das Blockschaltbild des Gesamtsystems dargestellt, wobei die Einzelkomponenten, soweit sie denen in Fig. 7 entsprechen, mit den gleichen Bezugszeichen versehen sind.

Prinzipiell spielen sich für die Pixelreihe einer Entfernungsstufe s eines Streifen-Abtastzyklus j folgende Vorgänge ab:

a) Übertragung der Pixel $_jb_{s,m}$ (m = 1 bis M) einer Pixelreihe s eines Abtaststreifens j in ein Pixelregister 21.

b) Übertragung der vor-integrierten Pixel $_{j-1}\overline{b}_{s,m}$ (m = n + 1 bis M) aus dem Integrationsspeicher 13 in ein Speicherregister 22.

c) Addition korrespondierender Pixel der Register 21 und 22 in einem Addierer 23 derart, daß jeweils die Pixel $_jb_{s,m}$ des Eingangsregisters 21 zu den Pixeln $_{j-1}\overline{b}_{s,m+n}$ des Speicherregisters 22 addiert werden, so daß die neuen integrierten Pixel $_j\overline{b}_{s,m}$ (m = 1 bis M) in einem Integrationsregister 24 entstehen.

d) Auslesen der Pixel $_j\overline{b}_{s,1}$ bis $_j\overline{b}_{s,n}$ aus dem Integrationsregister 24 und Multiplikation mit Hilfe eines Multiplizierers 25 mit dem Reduktinsfaktor 1/r, wobei r die Zahl der Integrationen darstellt (r ist entfernungsabhängig) und Übernahme der endgültigen, reduzierten Pixel $_j\overline{\overline{b}}_{s,m}$ (m = 1 bis n) in ein Zwischenregister 27.

e) Zwischenspeicherung der integrierten Pixel $_j\overline{b}_{s,m}$ (m = n + 1 bis M) in dem Integrationsspeicher 13.

Der Integrationsspeicher 13 ist im Prinzip einer Matrix mit S Zeilen für jede Entfernungsstufe s und M - n Spalten aufgebaut; vgl. Fig. 9.

Bei dem vorliegenden Beispiel findet eine 4-fache Integration statt, sofern sämtliche m Pixel-Plätze besetzt sind. So ergeben sich beispielsweise die Signale

$_j\overline{\overline{b}}_{s,1}$ und $_j\overline{\overline{b}}_{s,2}$ für die Geländepixel

$G_{s,7}$ und $G_{s,8}$ aus folgenden Integrationen:

$G_{s,7}$: $_j\overline{\overline{b}}_{s,1} = 1/4 \, (_1b_{s,7} + {}_2b_{s,5} + {}_3b_{s,3} + {}_4b_{s,1})$

$G_{s,8}$: $_j\overline{\overline{b}}_{s,2} = 1/4 \, (_1b_{s,8} + {}_2b_{s,6} + {}_3b_{s,4} + {}_4b_{s,2})$

Dieses Verfahren kann auch für einen geringeren Integrationsgrad modifiziert werden, was einfach durch Verminderung der zu bildenden Pixelzahl M geschehen kann.

Die Fig. 9 zeigt in einem Prinzip-Funktionsbild die Arbeitsweise in Zusammenhang mit dem oben zu Fig. 7 dargestellten Funktionsablauf.

Für Entfernungsbereiche, die eine Integration benachbarter Abtaststreifen erforderlich macht, werden in der oben beschriebenen Weise über die Speicher 3 und 5 und die Prozessoren 4 und 9 jeweils für einen Entfernungsschritt s die Pixelsignale $_jb_{s,m}$ (m = 1 bis M) gebildet und über den Speicher 10 in das Eingangsregister 21 des Integrationsprozessors 12 eingelesen. Gleichzeitig werden aus dem Integrationsspeicher 13 die bereits vor-integrierten Pixel $_{j-1}\overline{b}_{s,m}$ (m = n + 1 bis M) in das Speicherregister 22 eingelesen. Nach Addition, Reduktion und Auslesen der endgültigen integrierten Pixel $_j\overline{\overline{b}}_{s,m}$ (m = 1 bis n) in den Zwischenspeicher 27 wird der Inhalt des Integrationsregisters 24 in den Integrationsspeicher 13 abgespeichert.

Der Integrationsspeicher 13 muß daher S Zeilen und (M - n) Spalten haben, wobei jeder Platz einen integrierten Signalwert $\overline{b}_{s,m}$ enthält.

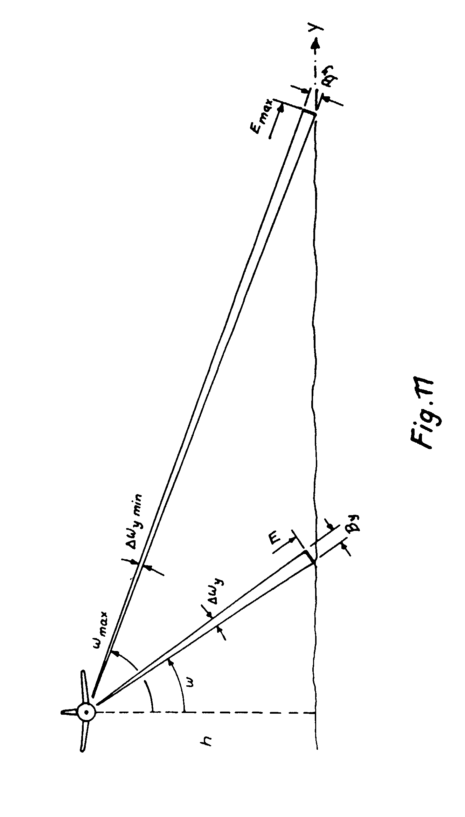

Im zusammunhang mit den Figuren 11ff. werden folgende Bezeichnungen benützt:

$B = B_x = B_y$      Objektpixelgröße

n      Zahl der parallelen Pixelreihen einer Abtastung

$B_n = n \cdot B$      Breite eines Abtaststreifens

E      Abtastentfernung vom Abtaster zum Objektpixel

$E_{max}$      Maximale Abtastentfernung

$h = E_{min}$      Flughöhe

$k = \dfrac{E_{max}}{h}$      Konstante

v      Fluggeschwindigkeit

$\omega$      Abtastwinkel, Richtung des Abtaststrahls vom Abtaster zum Objektpixel, bezogen auf die Lotlinie

$\dot{\omega}$ — Winkelgeschwindigkeit des Abtaststrahls

$\Delta t_y$ — Abtastperiode des Detektorsignals

$\Delta t_x$ — Abtastperiode des Zeilensignals

$\Delta t_M$ — Auslesetakt der Zeilenspeicher

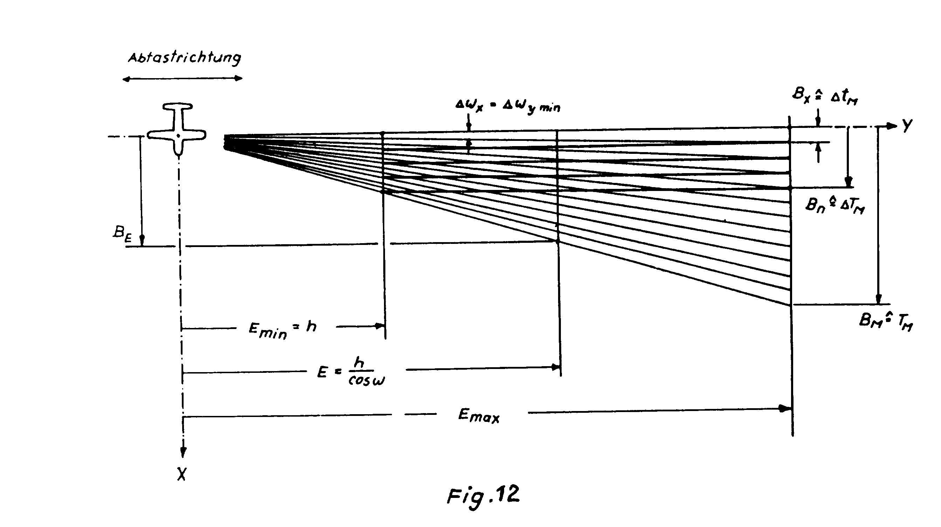

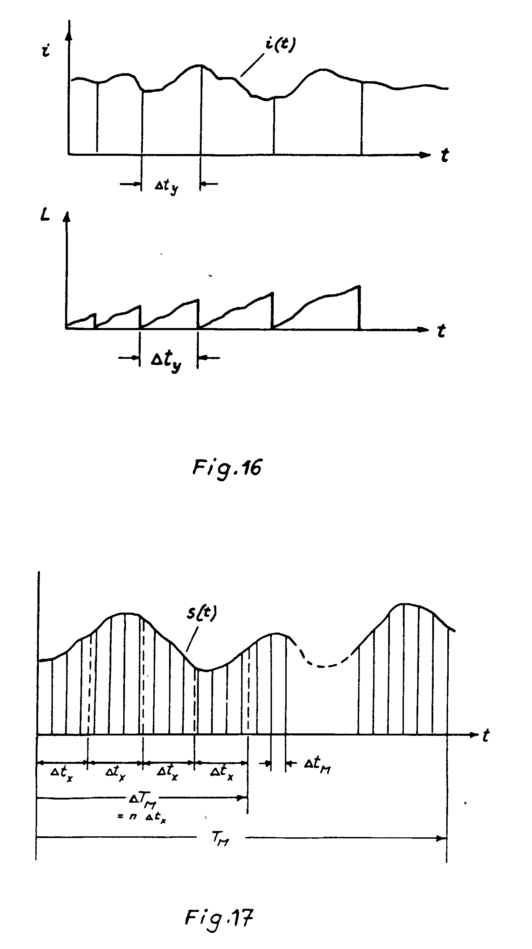

1 — Zahl der Zeilenspeicherketten Dabei wird wiederum davon ausgegangen, daß die Abtastung mit einer Detektorreihe erfolgt, deren Projektion auf das überflogene Gelände quer zur Abtastrichtung und demzufolge in Flugrichtung X liegt (Fig. 11 und 12) und aus einer Anzahl M diskreter Einzeldetektoren 21, $D_1$ bis $D_M$ besteht (Fig. 13, 14, 15). Die Signale werden parallel und gleichartig verarbeitet. In entsprechenden Vorverstärkern 22 werden die eigentlichen Nutzsignale durch Trennung von einem stets vorhandenen Dunkelsignal erzeugt, bezüglich ihrer Empfindlichkeitsunterschiede normiert und stehen als Nutzsignalstrom i(t) zur Verfügung, wobei die Stromstärke i proportional der Strahlungsintensität des Objektes ist (Fig. 16). Dieser kontinuierlich fließende Signalstrom i(t) (der durch die Objektstrahlung moduliert und von einem gewissen Signalrauschen überlagert ist), wird in Zeitintervallen $\Delta t_y$ abgetastet und jeweils einem Speicher S, z.B. einem Kondensator zugeführt (Fig.13). Es entstehen dort die Signal-Ladungen

$$L = i\,(t)\cdot\Delta t_y \qquad\qquad (10)$$

$\Delta t_y$ wird als Funktion des Scanwinkels $\omega$ des Abtasters gesteuert und entspricht jeweils einem Winkelinkrement $\Delta\omega_y$ (siehe Fig.11).

$$\Delta t_y = \frac{\Delta\omega_y}{\dot{\omega}} = \frac{B_y}{E\cdot\dot{\omega}} = \frac{B_y\cdot\cos\omega}{h\cdot\dot{\omega}} \qquad\qquad (11)$$

$$\Delta t_y = k_y\cdot\cos\omega$$

Zu bemerken ist, daß die Signalladungen aufeinanderfolgender Abtastperioden infolge der unterschiedlichen Integrations- bzw. Abtastzeiten $\Delta t_y$ nicht unmittelbar vergleichbar sind sondern dementsprechend normiert werden müssen.

Um für die Weiterverarbeitung der M Detektorsignale einer Abtastperiode $\Delta t_y$ genügend Zeit zu haben, werden die parallel anfallenden Signale aufeinanderfolgender Abtastperioden durch Verteiler 26 (Multiplexer) in mehreren (1) Speicher-Ketten 24, 25 abgelegt. Es werden mindestens 1 = 2 gleichartige, parallele Pufferspeicherketten mit jeweils weiteren Signalverarbeitungsketten angeordnet, je nach Zeitbedarf.

In den Figuren 13, 14, 15 sind nur zwei Speicherketten 24, 25, bzw. $\overline{24}$, $\overline{25}$, bzw. $\overline{\overline{24}}$, $\overline{\overline{25}}$ gezeichnet.

Die Speicher sind folgendermaßen bezeichnet:

$$_1S_1\,,\quad _1S_2\quad \cdots\cdots\quad _1S_M$$

$$_2S_1\qquad _2S_2\qquad\qquad _2S_M$$

$$\cdots\cdots\cdots\cdots\cdots\cdots\cdots\cdots$$

$$_\ell S_1\qquad _\ell S_2\qquad\qquad _\ell S_M$$

Nachdem die letzte Speicherreihe $_\ell S_1 \ldots {}_\ell S_M$ gefüllt ist, sind die Signale der ersten Speicherreihe weiterverarbeitet, und die Signale der nächsten Abtastperiode können wieder in der ersten Speicherreihe $_1S_1$, $_1S_2 \ldots {}_1S_M$ abgelegt werden usw..

Statt die Detektorsignale als Strom i(t) jeweils zu einer Ladung L zu integrieren, können sie auch als Spannungssignale u(t) generiert und in den digital steuerbaren Abtastperioden $\Delta t_y$ mit Sample- und Holdschaltungen 34 abgetastet werden, wie das im Ausführungsbeispiel der Fig. 4 dargestellt ist.

Eine Normierung bzgl. der Abtastzeit $\Delta t_y$ erübrigt sich in diesem Fall.

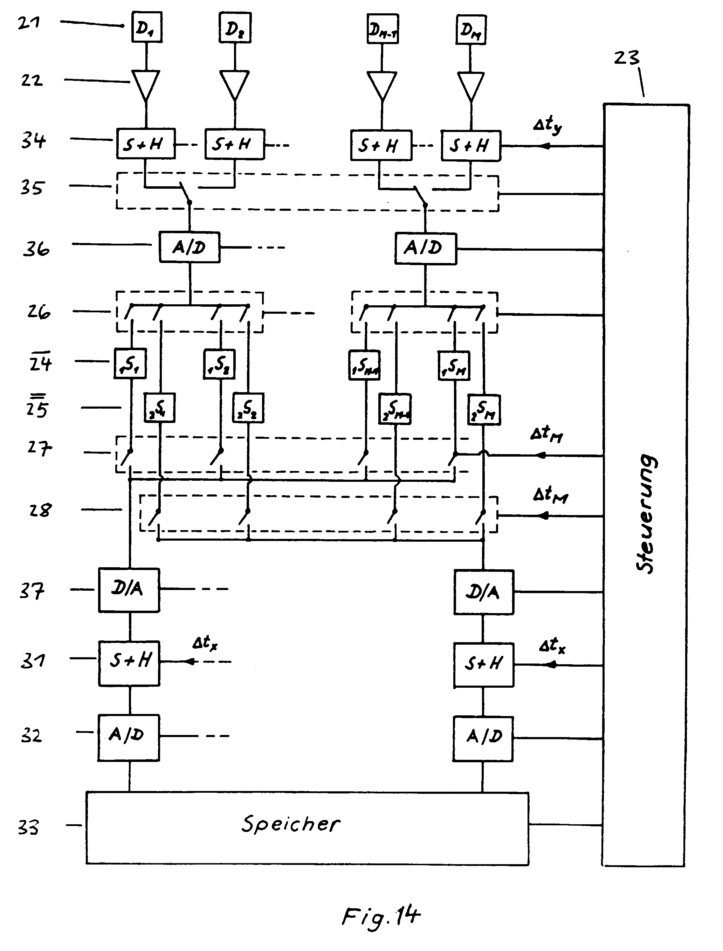

Im Ausführungsbeispiel gemäß Fig. 14 werden die Detektorsignale digital gespeichert. Ihre Digitalisierung findet nach der Abtastung mit Sample- und Holdschaltern 34 durch Analog-Digitalwandler 36 statt. Es kann zweckmäßig sein, mehrere Detektorsignale nacheinander über einen A/D-Wandler zu digitalisieren, wobei die Zeitfolge von dem Multiplexer 35 gesteuert wird.

Aus den in den analogen oder digitalen M Speichern anstehenden Signalen einer Abtastperiode $\Delta t_y$ bzw. einer Speichereihe $_\ell S_1 \dots {}_\ell S_M$ wird ein analoges Signal gebildet, das den Strahlungsverlauf einer Zeile darstellt. Dieses analoge Zeilensignal s(t) wird ähnlich behandelt wie die einzelnen Detektorsignale. Ein Zeilensignal wird jeweils in gleichen Abtastperioden $\Delta t_x$ abgetastet, wobei $\Delta t_x$ eine Funktion des Scanwinkels $\omega$ und $k_x$ eine Konstante darstellen (Fig. 17).

$$\Delta t_x = k_x \cdot \cos \omega \qquad (12)$$

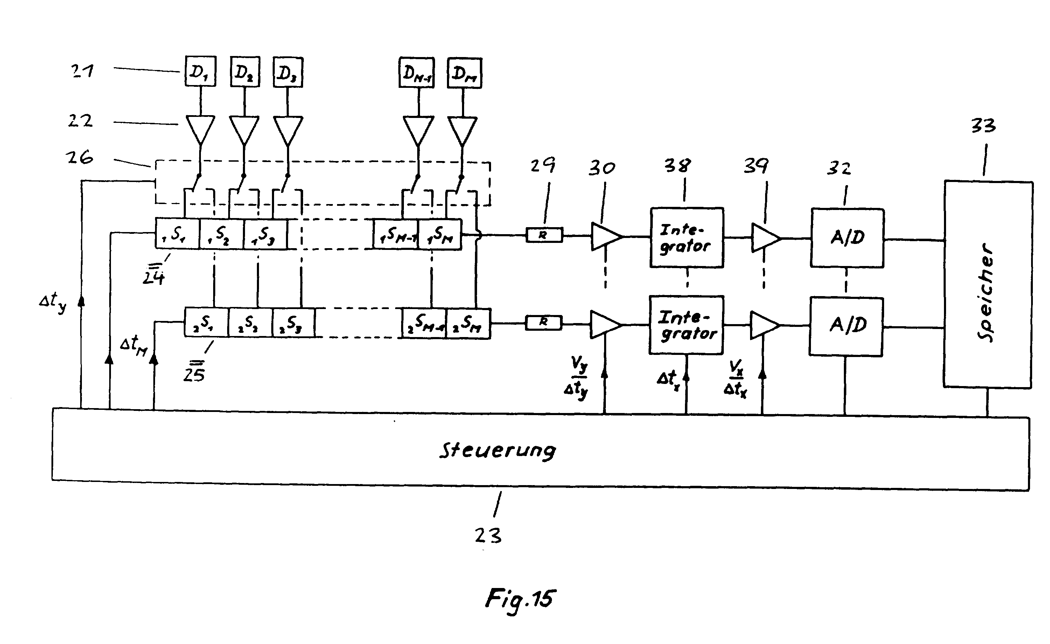

Von jeder Zeile werden mit Sample- und Holdschaltern 31 gemäß Fig. 13 und 14 oder mit Integratoren 38 gemäß (Fig. 15), die die Zeilensignale s(t) in Perioden $\Delta t_x$ integrieren, stets n $\Delta t_x$ - Perioden abgetastet (Fig. 17). Sie bilden die endgültigen Signale der Objektpixel B , die zweckmäßig über Analog-Digitalwandler 32 digitalisiert und in einen Speichermodul 33 abgelegt werden (Fig. 13, 14, 15).

Die Bildung der analogen Zeilensignale s(t) kann auf verschiedene Weise erfolgen, jenachdem, ob die Detektorsignale einer Zeile analog (z.B. in Kondensatoren) oder digital abgespeichert sind. Um zeitkritischen Problemen zu begegnen werden, wie bereits angedeutet, mehrere, mindestens l=2 Speicher- und Signalverarbeitungsketten angeordnet, die die Signale aufeinanderfolgender Zeilen aufnehmen und sie parallel abarbeiten (Fig. 13, 14, 15).

Sind die Detektorsignale einer Zeile analog, z.B. in Kondensatoren 24 und 25 gespeichert (Fig. 13), so werden diese über analoge Mulitplexschalter 27 , 28 , nacheinander ausgelesen und bilden so ein kontinuierliches analoges Zeilensignal s(t) (Fig. 17), wobei die Widerstände (R) 29 mit den Kondensatoren 24 bzw. 25 eine gewisse Glättung des Zeilensignals bewirken.

Sind die Detektorsignale digital gespeichert (Fig. 14), so werden sie ebenfalls über Multiplexer 27 , 28 nacheinander ausgelesen und über Digital-analog-Wandler 37 in analoge Signale s(t) gewandelt (Fig. 17).

Die Integration der Detektorsignale, ihre Speicherung und die Bildung der Zeilensignale kann auch in bekannten, sogenannten "Charge Coupled Devies" (CCD's), $\overline{\overline{24}}$, $\overline{\overline{25}}$, gemäß Fig. 15 erfolgen.

Diese analogen Speicherketten werden mit dem Taktsignal $\Delta t_M$ seriell ausgelesen.

Zur Bildung des vollständigen Zeilensignals s(t) sind stets M gespeicherte Signale aus den 1 Speicherketten 24 und 25 bzw. $\overline{24}$ und $\overline{25}$ bzw. $\overline{\overline{24}}$, $\overline{\overline{25}}$ auszulesen. Der Auslesetakt $\Delta t_M$ ist konstant, die Gesamtzeit des Zeilensignals s(t) ist somit

$$T_M = M \cdot \Delta t_M = \text{konstant} \qquad (13)$$

Von diesem kompletten Zeilensignal $T_M$ wird jeweils ein Zeitabschnitt $\Delta T_M$ benötigt, der zur Bildung von n Pixelsignalen B erforderlich ist (Fig. 17).

Dieser Zeitabschnitt $\Delta T_M$ darf nicht größer sein als die für die Weiterverarbeitung eines Zeilensignals zur Verfügung stehende Zeit. Diese ergibt sich aus dem Abtastintervall $\Delta t_y$ und der Zahl 1 der Pufferspeicher-Reihen 24, und 25 bzw. $\overline{24}$ und $\overline{25}$ bzw. $\overline{\overline{24}}$ und $\overline{\overline{25}}$ :

$$\Delta T_M \leqq \Delta t_y \cdot (l-1) \qquad (14)$$

Es ist nun die Taktzeit $\Delta t_M$ zu ermitteln, mit der die Speicherketten auszulesen sind. Die kürzeste Detektorperiode $\Delta t_{y\,min} = \Delta t_o$ entsteht bei der größten Entfernung $E_{max}$

$$\Delta t_o = \frac{B_y}{E_{max} \cdot \dot\omega} \qquad (15)$$

In diesem Fall sind n Speicher bzw. Pixel auszulesen, d.h., daß für

$$\Delta t_M = \frac{\Delta T_M}{n} \leqq \frac{\Delta t_o}{n} (\ell-1) \qquad (16)$$

gewählt werden muß, daher ist

$$\Delta t_M = \frac{B_y (\ell-1)}{E_{max} \cdot n \cdot \dot\omega} \qquad (17)$$

Aus der Fig. 12 sind weiterhin folgende Beziehungen ablesbar:

$$\frac{\Delta T_M}{T_M} = \frac{B_n}{B_E} \qquad (18)$$

$$\frac{B_E}{B_M} = \frac{E}{E_{max}} \qquad (19)$$

$$B_n = n \cdot B_x \tag{20}$$

$$B_M = M \cdot B_x \tag{21}$$

Aus (18) bis (21) erhält man für $\Delta T_M$:

$$\Delta T_M = \frac{T_M \cdot n \cdot E_{max}}{E \cdot M} \tag{22}$$

und für $\Delta t_x$ :

$$\Delta t_x = \frac{\Delta T_M}{n} = \frac{T_M \cdot E_{max}}{E \cdot M} \tag{23}$$

Setzt man (13) in (23) ein, so ist mit $k = \frac{E_{max}}{h}$

$$\Delta t_x = \Delta t_M \cdot k \cdot \cos \omega \tag{24}$$

Für die Beispiele der Signalbildung durch Integration der Detektorsignale gemäß Fig. 13 und 15 erfolgt die Normierung durch die digital gesteuerten Verstärker 30 mit dem Faktor $V_y / \Delta t_y$ wobei $V_y$ eine Verstärkerkonstante darstellt.

Auch im Beispiel nach Fig. 14 könnte die Abtastung der Detektorsignale durch Integration erfolgen.

Die Abtastung der Zeilensignale s(t) mit dem Abtasttakt $\Delta t_x$ erfolgt in den Beispielen nach Fig. 13 und 14 durch Sample- und Holdschalter 31 . In diesem Fall ist keine Normierung erforderlich.

Im Beispiel nach Fig. 15 erfolgt die Zeilenabtastung durch Integration gemäß Fig. 16 und 17. In diesem Fall ist nach der Integration des $\Delta t_x$ -Signals eine Normierung mit einem Faktor $V_x / \Delta t_x$ durch einen digital gesteuerten Verstärker 39 erforderlich, wobei $V_x$ eine Verstärkerkonstante darstellt.

Im Beispiel nach Fig. 15 könnte die Normierung mit jeweils einem einzigen Verstärker 39 je Signalkette vorgenommen werden, wobei der Normierungsfaktor nach

$$\frac{V_{x,y}}{\Delta t_x \cdot \Delta t_y}$$

gesteuert werden müßte. Es entfallen dann die Verstärker 30.

In jedem Fall ist bei Signalbildung durch Integration eine Normierung erforderlich. Sie entfällt bei Sampl- und Hold-Abtastung.

Die gesamte Steuerung des zeitlichen Ablaufes erfolgt durch eine zentrale Steuerung 23, die von entsprechenden Sensoren die Meßdaten $\omega$, h, v erhält.

Die digitalisierten Objektpixeldaten werden von einem Speicher 33 aufgenommen und ggf. weiterverarbeitet.

Die hier beschriebenen Ausführungsbeispiele lassen sich selbstverständlich variieren und kombinieren.

Die Abtastung durch Integration der Detektor- und Zeilensignale liefert grundlätzlich bessere Mittelwerte als die Sample- und Holdabtastung. Es muß im praktischen Fall entschieden werden, welche Ausführungsform am zweckmäßigsten ist.

Diese erfindungsgemäße Signalauswertung bietet folgende Vorteile:

1. Die analoge Detektor- und Zeilensignalbildung und digital gesteuerte Abtastung verbindet den Vorteil der schnellen Signalverarbeitung mit geringerem Aufwand und guter Anpassungsfähigkeit an Flughöhe und Geschwindigkeit.
2. Diese vorgeschlagene Lösung läßt sich gut als integrierte Schaltung verwirklichen und ermöglicht daher, eine relativ große Zahl von Detektorsignalen zu verarbeiten.
3. Durch die Anordnung mehrerer 1 paralleler Verarbeitungsketten kann diese Lösung selbst extremen Anforderungen an die Verarbeitungsgeschwindigkeit genügen.


**Patentansprüche**

1. Verfahren zum Abtasten eines Objektes, z.B. einer Geländeoberfläche, quer zur Flug- bzw. Bewegungsrichtung eines Abtasters mit einer rechtwinklig zur Abtastrichtung angeordneten Detektorreihe, die mehrere gleich große Einzeldetektoren enthält, **dadurch gekennzeichnet**,

   daß die Detektorsignale aufeinanderfolgender Belichtungsperioden des Abtasters und benachbarter Detektoren so zu Objektpixeln zusammengefaßt werden,

daß diese Objektpixelsignale unabhängig von der Objektentfernung auf Seiten des Objektes jeweils Flächen entsprechen, deren Projektion in Richtung des Abtaststrahles in eine Ebene senkrecht zum Abtaststrahl Standardflächen annähernd konstanter Größe ergeben,

und daß bei jeder Abtastung ein Objektstreifen aus lückenlos aneinandergrenzenden Standardflächen mit konstanter Anzahl in Breite und Länge des Objektstreifens erfaßt wird.

2. Verfahren gemäß Anspruch 1, dadurch gekennzeichnet, daß durch die Zusammenfassung der Detektorsignale einer Abtastung eine oder mehrere Reihen gleich großer paralleler Objektpixel-Reihen gebildet werden.

3. Verfahren nach Anspruch 1 oder 2 dadurch gekennzeichnet, daß auch in den Überdeckungsgebieten benachbarter Abtaststreifen für jeden Abtaststreifen (j) ein regelmäßiges Pixelraster gleich großer Standardflächen gebildet wird und zwecks Verbesserung des Signal-/Rauschverhältnisses die den Standardflächen B entsprechenden Pixelsignale (b) benachbarter Streifen, die gleiche Geländepixel (G) abdecken, integriert werden.

4. Verfahren nach Anspruch 3, dadurch gekennzeichnet, daß

a) die innerhalb eines Abtaststreifens j gebildeten den Standardflächen entsprechenden Standardpixelsignale ($_jb_{s,m}$; m = 1 bis M) einer Entfernungsstufe (s), die maximal bis zu M Pixel enthalten kann, aus einem Zwischenregister (10) in das Eingangsregister (21) eines Integrationsprozessors (12) eingelesen werden,

b) die vorintegrierten Pixel ($_{j-1}b_{s,m}$; m = n + 1 bis M) der vorausgehenden Abtastung (j-1) aus einem Integrationsspeicher (13) in ein Speicher-Register (22) des Integrationsprozessors (12) eingelesen werden,

c) die Pixel ($_jb_{s,m}$) des Eingangsregisters (21) mit den um n Pixel versetzten Pixeln ($_{j-1}b_{s,m}$; m = n + 1 bis M) des Speicher-Registers (22) über einen Addierer (23) addiert werden, so daß die neuen integrierten Pixel ($_jb_{s,m}$; m = 1 bis M) in einem Integrationsspeicher (24) des Integrationsprozessors (12) entstehen,

d) die Pixel ($_jb_{s,m}$; m = 1 bis n) aus dem Integrationsregister (24) ausgelesen und durch Multiplikation über einen Multiplizierer (25) mit dem Reduktionsfaktor 1/r die endgültigen Pixel ($_jb_{s,m}$; m = 1 bis n) erzeugt und in einem Zwischenregister (27) abgelegt werden, wobei r die Zahl der Integrationen darstellt, die von einem Steuerrechner (25) an den Multiplizierer geliefert werden,

e) die Pixel ($_jb_{s,m}$; m = n + 1 bis M) aus dem Integrationsregister (24) in den Integrationsspeicher (13) übernommen werden,

und daß sich für jede Entfernungsstufe (s) und für jede Abtastung (j) diese Vorgänge a) bis e) wiederholen.

5. Verfahren nach einem der Ansprüche 1 bis 4, dadurch gekennzeichnet, daß die Detektor-Signale der (M) Einzeldetektoren durch digitale Steuerung der Abtastperiode

$$\Delta t_y = \frac{B_y}{E \cdot \dot{\omega}} = \frac{B_y}{h \cdot \dot{\omega}} \cos \omega = k_y \cdot \cos \omega$$

als Funktion der Abtastentfernung (E) bzw. der Flughöhe (h) und des Abtastwinkels ($\omega$) und der Winkelgeschwindigkeit ($\dot{\omega}$) des Abtastelements gebildet werden, wobei mit $B_y$ die Standard-Objektpixel bezeichnet sind.

6. Verfahren nach Anspruch 5, dadurch gekennzeichnet, daß die Detektorsignale durch Integration über die Abtastperiode $\Delta t_y$ oder duch Sample und Holdabtastung mit den Abtastperioden $\Delta t_y$ gebildet werden.

7. Verfahren nach Anspruch 5, dadurch gekennzeichnet, daß die (M) Detektorsignale einer Abtastperiode in (M) Speicherzellen gespeichert, diese Detektorsignale nacheinander ausgelesen und daraus ein analoges Zeilensignal s(t) einer Abtastperiode ($\Delta t_y$) gebildet wird und daß dieses Zeilensignal s(t) in (n) digital gesteuerten Abtastperioden ($\Delta t_x$) gleicher Länge abgetastet wird derart, daß diese Abtastperiode $\Delta t_x$ der Standard-Objektpixelgröße $B_x = B_y = B$ entspricht und die Abtastperiode ($\Delta t_x$) eines Zeilensignals s(t) jeweils eine Funktion der Abtastentfernung (E) bzw. der Flughöhe (h) und des Abtastwinkels $\omega$) ist gemäß

$$\Delta t_x = k_x \frac{h}{E} = k_x \cdot \cos \omega$$

wobei $k_x$ eine Konstante darstellt, die die Auslesegeschwindigkeit des Zeilensignals s(t) bestimmt.

**8.** Verfahren nach Anspruch 7, dadurch gekennzeichnet, daß die analogen Detektorsignale digitalisiert und digital abgespeichert werden, daß diese Speicher nacheinander ausgelesen und über einen Digital-Analog-Wandler in ein analoges Zeilensignal s(t) gewandelt und mit der Abtastperiode $\Delta t_x$ abgetastet werden.

**9.** Verfahren nach Anspruch 7, dadurch gekennzeichnet, daß das analoge Zeilensignal s(t) entweder durch Integration oder durch Sample- und Hold-Schalter abgetastet und daraus die endgültigen, den Objektpixeln (B) entsprechenden Signale gebildet werden.

**10.** Vorrichtung zur Durchführung des Verfahrens nach Anspruch 1, enthaltend eine rechtwinklig zur Abtastrichtung angeordnete Detekterreihe, die mehrere gleich grosse Einzeldetektoren enthält, **gekennzeichnet** durch

> a) einen ersten Speicher (3), in welchem im Betrieb die Detektorsignale der einzelnen Detektoren (1) der Detektorreihe innerhalb einer Belichtungsperiode abgespeichert werden;
> b) einen ersten Prozessor (4), der so programmiert ist, dass er im Betrieb die Detektorsignale einer Belichtungsperiode zu n, jeweils die anzustrebende Objektpixelbreite $B_x$ aufweisenden Detektorsignalgruppen zusammenfasst;
> c) einen zweiten Speicher (5), in welchem im Betrieb die Detektorsignalgruppen aufeinanderfolgender Belichtungsperioden abgelegt werden;
> d) einen zweiten Prozessor (9), der so programmiert ist, dass er im Betrieb die Detektorsignalgruppen aufeinanderfolgender Belichtungsperioden zum Erzeugen von Objektpixelsignalen der anzustrebenden Objektpixelgröße $B_x \cdot B_y$ zusammenfasst; und
> e) einen Massenspeicher (11), in welchem im Betrieb die Objektpixelsignale abgelegt werden.

**11.** Vorrichtung nach Anspruch 10, dadurch gekennzeichnet, daß ein Programmodul (8) zur Steuerung der Prozessoren (4, 9) vorgesehen ist, der mit einem Winkelstellungsgeber (86) des Abtasters und einem Höhenmesser (7) verbunden ist, daraus die entfernungs- und höhenabhängigen Detektorsignal-Kombinationen bildet und die Prozessoren (4, 9, 12) aufgrund dieser Signal-Kombinationen steuert.

**12.** Vorrichtung nach Anspruch 11, dadurch gekennzeichnet, daß der Winkelstellungsgeber (6) stets den auf die Lotlinie zwischen Abtaster und Objekt bezogenen Abtastwinkel liefert.

**13.** Vorrichtung nach einem der Ansprüche 10 bis 12, dadurch gekennzeichnet, daß ein Integrationsregister (13) vorhanden ist, in dem die integrierten Pixelwerte ($_jb_{s,m}$) matrixförmig gespeichert sind, wobei der Speicher (13) (M - n) Spalten und S Zeilen (S = Zahl der Entfernungsstufen) aufweist.

**14.** Vorrichtung nach Anspruch 13, dadurch gekennzeichnet, daß die Multiplikation der integrierten und aus dem Integrationsregister (13) ausgelesenen Pixel (b) durch einen Multiplizierer (25) erfolgt, dessen Multiplikationsfaktor (1/r) entfernungsabhängig durch einen Steuerrechner (26) gesteuert wird.

**15.** Vorrichtung nach Anspruch 10, dadurch gekennzeichnet, daß zum Speichern der Detektorsignale Speicherzellen (M) vorgesehen sind, die als Kondensatoren ausgebildet und über Analogschalter nacheinander ausgelesen werden und das Zeilensignal s(t) bilden.

**16.** Vorrichtung nach Anspruch 10, dadurch gekennzeichnet, daß zum Speichern der Detektorsignale Speicherzellen (M) vorgesehen sind, die als an sich bekannte "Charge Coupled Devices" (CCD's) ausgebildet und die Detektorsignale seriell ausgegeben werden und das Zeilensignal s(t) bilden.

**17.** vorrichtung nach Anspruch 10, dadurch gekennzeichnet, daß mehrere (1) Speicherketten mit jeweils anschließender Auslesevorrichtung für die Bildung der Zeilensignale s(t) und Abtastung zur Bildung der Objektpixelsignale vorgesehen sind, so daß die Verarbeitung der Detektorsignale in (1) parallelen Signalketten erfolgt.

## Claims

**1.** Process for scanning an object, for example a terrain surface, transversely to the flight or movement direction of a scanner, comprising a detector array arranged rectangularly to the scanning device with a plurality of individual detectors of identical size, **characterized in that**

- the detector signals of successive exposure periods of the scanner and adjacent detectors are thus combined into object pixels;
- that these object pixel signals correspond, independently from the object distance on the side of the object, with surfaces the projection of which in the direction of the scanning beam in a plane vertically to the scanning beam produces standard surfaces of virtually constant size; and
- that each scan covers an object strip of directly adjacent standard surfaces of constant number in width and length of the object strip.

2.  Process according to Claim 1, **characterized in that** one or more rows of parallel object pixel lines of identical dimension are produced by way of combining the detector signals of one scan.

3.  Process according to Claim or 2, **characterized in that** in the overlapping areas of adjacent scan strips as well is formed a regular pixel raster of standard surfaces of identical size for each scan strip (j), and that, for the purpose of improving the signal/noise ratio, pixel signals (b) of adjacent strips, which correspond with the standard surfaces B and cover the same terrain pixels (G), are integrated.

4.  Process according to Claim 3, **characterized in that**

a) the standard pixel signals ($_jb_{s,m}$; m = 1 to M) of one range stage (s) which are formed within a scanning strip j and which can contain maximum up to M pixel, are read from an intermediate register (10) into the input register (21) of an integration processor (12);

b) the pre-integrated pixels ($_{j-1}b_{s,m}$ m = n + 1 to M) of a previous scan (j-1) are read from an integration store (13) into a memory register (22) of the integration processor (12).

c) the pixels ($_jb_{s,m}$) of the input register (21) and the pixels ($_{j-1}b_{s,m}$; m = n + 1 to M) of the storage register (22), which are transposed by n pixels, are added via an adding unit (23), so that the new integrated pixels ($_jb_{s,m}$; m - 1 to M) are produced in an integration store (24) of the integration processor (12) ;

d) the pixels ($_jb_{s,m}$ ; m = 1 to n) are read from the integration register (24), and that the final pixels ($_jb_{s,m}$; m = 1 to n) are generated by being multiplied via a multiplier (25) by the reduction factor 1/r and stored in an interim register (27), and that r represents the number of integrations which are fed from a control computer (25) to the multiplier;

e) the pixels ($_jb_{s,m}$; m = n + 1 to M) are transferred from the integration register (24) into the integration store (13), and that

these processes a) to e) are repeated for each range stage (s) and for each scan (j).

5.  Process according to one of claims 1 to 4, **characterized in that** the detector signals of the (M) individual detectors are established by digital control of the scanning period

$$\Delta t_y = \frac{B_y}{E x \omega} = \frac{B_y}{h x \omega} \cos\omega = k_y \text{ x } \cos\omega$$

as a function of the scanning range (E) or the flight altitude (h) and of the scanning angle ($\omega$) and the angular velocity ($\omega$) of the scanning element, where $B_y$ represents the standard object pixels.

6.  Process according to Claim 5, **characterized in that** the detector signals are formed by integration over the scanning period $\Delta t_y$ or by sample and hold scanning with scanning periods $\Delta_{ty}$.

7.  Process according to Claim 5, **characterized in that** the (M) detector signals of a scanning period are stored in (M) memory cells, that these detector signals are read successively, thus forming an analog line signal s(t) of a scanning period ($\Delta t_y$), and that this line signal s(t) is scanned in (n) digitally controlled scanning periods ($\Delta t_x$) of equal length, so that this scanning period $\Delta t_x$ corresponds with the standard object pixel size $B_x = B_y = B$ and the scanning period ($\Delta t_x$) of a line signal s(t) is a respective function of the scanning range (E) or the flight altitude (h) and the scanning angle ($\omega$) according to

$$\Delta t_x = k_x \frac{h}{E} = k_x \text{ x } \cos\omega$$

where $k_x$ represents a constant which determines the reading speed of the line signal s(t).

8.  Process according to Claim 7, **characterized in that** the analog detector signals are digitalized and digitally stored, that the memories are read successively and converted via a digital/analog converter into an analog line signal s

14

(t) and scanned with a scanning period $\Delta t_x$ .

9. Process according to Claim 7, **characterized in that** the analog line signal s(t) is scanned either by integration or sample and hold circuit, and the final signals which correspond with the object pixels (B) are thus established.

10. Device for carrying out the process according to Claim 1, **characterized by**

a) a first memory (3), wherein detector signals of the individual detectors (1) of the detector array within an exposure period are stored during operation;

b) a first processor (4), which is programmed so that it combines detector signals of an exposure period ad n with a specified object pixel width $B_x$ during operation;

c) a second memory (5), wherein detector signal groups of successive exposure periods are stored during operation;

d) a second processor (9), which is programmed to combine detector signal groups of successive exposure periods for producing object pixel signals of a specified object pixel size $B_x$ x $B_y$ during operation; and

e) a mass memory (11), wherein the object pixel signals are stored during operation.

11. Device according to Claim 10, **characterized in that** a program module (8) is provided for controlling the processors (4, 9), which is connected to an angular position controller (86) of the scanner and an altimeter (7), and which establishes therefrom range- and altitude-dependent detector signal combinations and controls the processors (4, 9, 12) based on this signal combination.

12. Device according to Claim 11, **characterized in that** the angular position controller (6) continuously delivers the scanning angle relative to the plumb line between scanner and object.

13. A device according to Claims 10 to 12, **characterized in that** there is an integration register (13) which stores the integrated pixel values ($_jb_{s,m}$) in matrix form, and that the store comprises (13) (M - n) and S lines (S = number of range stages).

14. Device according to Claim 13, **characterized in that** multiplication of the pixels (b) which are integrated and have been read from the integration register (13) is carried out by a multiplier (25) the multiplication factor (l/r) of which is range-dependently controlled by a control computer (26).

15. Device according to Claim 10, **characterized in that** memory cells (M), which are in the form of condensers and are read successively via analog circuits and which form the line signal s(t), are provided for storing detector signals.

16. Device according to Claim 10, **characterized in that** memory cells (M), which are in the form of conventional "charge-coupled devices" (CCDs) and which release detector signals in series and which form the line signal s(t), are provided for storing detector signals.

17. Device according to Claim 10, **characterized in that** a plurality of (1) memory chains with respective adjacent readout are provided for forming the line signals s(t) and for scanning to form the object pixel signals, so that processing of the detector signals is carried out in (1) parallel signal chains.

**Revendications**

1. Procédé d'exploration d'un objet, par exemple d'une surface de terrain, transversalement à la direction de vol ou à la direction de déplacement d'un palpeur comportant une rangée de détecteurs qui est disposée perpendiculairement à la direction d'exploration et se compose de plusieurs détecteurs individuels de mêmes dimensions, caractérisé par le fait

que l'on groupe en pixels d'objet les signaux de détection de plusieurs périodes successives d'illumination du palpeur et de détecteurs successifs de manière telle que

lesdits signaux de pixels d'objet, indépendamment de la distance de l'objet, correspondent côté objet à des surfaces dont la projection dans la direction du faisceau d'exploration, sur un plan perpendiculaire au rayon d'exploration, produise des surfaces standards de dimensions sensiblement constantes

et que, à chaque exploration, on explore une bande d'objet formée de surfaces standards qui se succèdent sans vides, en nombre constant dans la largeur et la longueur de la bande d'objet.

2. Procédé selon la revendication 1, caractérisé par le fait que l'on forme par le groupement des signaux de détection d'une exploration une ou plusieurs séries de rangées parallèles et de même taille de pixels d'objet.

3. Procédé selon la revendication 1 ou la revendication 2, caractérisé par le fait que dans les zones de chevauchement entre des bandes d'exploration consécutives, on forme pour chaque bande d'exploration (j), un réseau régulier de pixels avec des surfaces standards de même dimension et, aux fins d'améliorer le rapport signal/bruit, on intègre les signaux de pixels (b) correspondant aux surfaces standards (B) de bandes voisines qui couvrent des pixels de terrain (G) identiques.

4. Procédé selon la revendication 3, caractérisé par le fait

a) qu'on transfère d'un registre intermédiaire (10) vers le registre d'entrée (21) d'un processeur d'intégration (12) les signaux de pixels standards ($_j b_{s,m}$; m = 1 à M) pour un palier de distance (s) pouvant contenir au maximum jusqu'à M pixels, qui correspondent aux surfaces standards formées à l'intérieur d'une bande d'exploration (j),
b) qu'on transfère d'un registre d'intégration (13) vers un registre mémoire (22) du processeur d'intégration (12) les pixels pré-intégrés ($_{j-1} b_{s,m}$; m = n + 1 à M) de l'exploration (j - 1) précédente,
c) qu'on ajoute au moyen d'un additionneur (23) les pixels ($_j b_{s,m}$) du registre d'entrée (21) et les pixels ($_{j-1} b_{s,m}$; m = n + 1 à M) du registre mémoire (22), de telle sorte que les nouveaux pixels ($_j b_{s,m}$; m =1 à M) intégrés soient produits dans une mémoire d'intégration (24) du processeur d'intégration (24),
d) qu'on lit dans la mémoire d'intégration (24) les pixels ($_j b_{s,m}$; m=1 à n) et, par multiplication au moyen d'un multiplicateur (25) avec le facteur de réduction 1/r on produit les pixels définitifs ($_j b_{s,m}$; m = 1 à n) et on les inscrit dans un registre intermédiaire (27), r représentant le nombre des intégrations qui sont fournies au multiplicateur par un calculateur de commande (25),
e) on transfère les pixels ($_j b_{s,m}$; m = n+1 à M) du registre d'intégration (24) dans la mémoire d'intégration (13) et par le fait que pour chaque palier de distance (s) et chaque exploration (j) on répète les étapes a) à e).

5. Procédé selon l'une des revendications 1 à 4, caractérisé par le fait que les signaux de détection des (M) détecteurs individuels sont formés par commande numérique de la période d'exploration

$$\Delta t_y = \frac{B_y}{E^*\omega} = \frac{B_y}{h^*\omega} \cos\omega = k_y{}^*\cos\omega$$

en tant que fonction de la distance d'exploration (E) ou de l'altitude de vol (h) et de l'angle d'exploration (ω) et de la vitesse angulaire (ω), $B_y$ désignant les pixels d'objet standards.

6. Procédé selon la revendication 5, caractérisé par le fait que l'on forme les signaux de détection par intégration sur la période d'exploration $\Delta t_y$ ou par échantillonnage et blocage avec les périodes d'exploration $\Delta t_y$.

7. Procédé selon la revendication 5, caractérisé par le fait que l'on met en mémoire dans (M) cellules de mémoire les (M) signaux de détection d'une période d'exploration, qu'on lit l'un après l'autre lesdits signaux de détection et on forme à partir de ceux-ci un signal de ligne s(t) analogique pour une période d'exploration ($\Delta t_y$) et par le fait qu'on lit ce signal de ligne s(t) en (n) périodes d'exploration ($\Delta t_x$) numériques de même longueur de telle sorte que cette période d'exploration ($\Delta t_x$) corresponde à la dimension de pixel d'objet standard $B_x = B_y = B$ et que la période d'exploration ($\Delta t_x$) d'un signal de ligne s(t) est chaque fois une fonction de la distance d'exploration (E) ou de l'altitude de vol (h) et de l'angle d'exploration (ω) suivant la formule

$$\Delta t_x = k_x h/E = k_x{}^* \cos\omega,$$

$k_x$ représentant une constante qui détermine la vitesse de lecture du signal de ligne s(t).

8. Procédé selon la revendication 7, caractérisé par le fait que l'on numérise les signaux analogiques de détection et on les met en mémoire sous forme numérique, qu'on lit l'une après l'autre ces mémoires et on les transforme en un signal de ligne s(t) analogique au moyen d'un convertisseur numérique-analogique et on les lit avec la période d'exploration ($\Delta t_x$).

9. Procédé selon la revendication 7, caractérisé par le fait qu'on lit le signal de ligne s(t) analogique soit par intégration, soit par commutation échantillonnage-blocage et on forme à partir de cela les pixels d'objet (B) définitifs correspondants.

**10.** Dispositif pour la mise en oeuvre du procédé selon la revendication 1, caractérisé par

a) une première mémoire (3) dans laquelle, pendant le fonctionnement, on stocke des signaux de détection des différents détecteurs (1) appartenant à la rangée de détecteurs pendant une période d'illumination,

b) un premier processeur (4) qui est programmé de telle sorte qu'en fonctionnement, les signaux de détection d'une période d'illumination soient groupés en n groupes de signaux de détection qui présentent la largeur de pixel d'objet $B_x$ recherchée,

c) une deuxième mémoire (5) dans laquelle, pendant le fonctionnement, on mémorise les groupes de signaux de détection de périodes d'illumination successives,

d) un deuxième processeur (9) qui est programmé de telle sorte qu'en fonctionnement les groupes de signaux de détection de périodes d'illumination successives soient groupés aux fins de produire des signaux de pixel d'objet de la taille de pixel d'objet $B_x . B_y$ recherchée et

e) une mémoire de masse (11) dans laquelle, pendant le fonctionnement, on mémorise des signaux de pixel d'objet.

**11.** Dispositif selon la revendication 10, caractérisé par le fait qu'il est prévu un module de programme (8) pour la commande des processeurs (4, 9) qui est lié à un détecteur de position angulaire (86) du palpeur et à un altimètre (7) et détermine à partir de cela les combinaisons de signaux de détection qui dépendent de la distance et de l'altitude et commande les processeurs (4, 9, 12) sur la base de ces combinaisons de signaux.

**12.** Dispositif selon la revendication 11, caractérisé par le fait que le détecteur de position angulaire (6) fournit toujours l'angle d'exploration rapporté à la verticale entre le détecteur et l'objet.

**13.** Dispositif selon l'une des revendications 10 à 12, caractérisé par le fait qu'il est prévu un registre d'intégration (13) dans lequel les valeurs de pixels ($_jb_{s,m}$) sont mémorisées sous forme de matrice, la mémoire (13) comportant (M - n) colonnes et S lignes (S = nombre des paliers de distance).

**14.** Dispositif selon la revendication 13, caractérisé par le fait que la multiplication des pixels intégrés (b) et des pixels lus dans le registre d'intégration (13) est réalisée au moyen d'un multiplicateur (25) dont le facteur de multiplication (1/r) est commandé par un calculateur de commande (26) en fonction de la distance.

**15.** Dispositif selon la revendication 10, caractérisé par le fait qu'il est prévu, pour le stockage des signaux de détection des cellules de mémoire (M) qui se présentent sous la forme de condensateurs, sont lues l'une après l'autre par l'intermédiaire de commutateurs analogiques et forment le signal de ligne s(t).

**16.** Dispositif selon la revendication 10, caractérisé par le fait qu'il est prévu pour le stockage des signaux de détection, des cellules de mémoire (M) qui se présentent sous la forme de "Charge Coupled Devices" (CCD) connus, que les signaux de détection sont édités en série et forment le signal de ligne s(t).

**17.** Dispositif selon la revendication 10, caractérisé par le fait que qu'il est prévu pour former les signaux de pixels d'objet plusieurs (1) chaînes de mémoires avec chacune un dispositif de lecture pour la formation des signaux de ligne s(t) et l'exploration pour la formation de pixels d'objet, de telle sorte que le traitement des signaux de détection a lieu dans (1) chaînes de signaux parallèles.

Fig. 1

Fig. 2

Fig. 3

Fig. 4

Fig. 5

EP 0 308 932 B1

Fig. 6

Fig. 7

Fig. 8

Detektoren

Winkelgeber W  6

Höhenmesser H  7

8

Programm- Modul

A/D -
Wandler  2

Speicher
$S_1$  3

Prozessor
$P_1$  4

Speicher
$S_2$  5

Prozzesor
$P_2$  9

Speicher
$S_3$  10

Integrations-
Prozessor
$P_3$  12

Massen-
Speicher  11

13

$\overline{b}_{s,m}$

m = n+1 ..... M

s

S

Integrations-
Speicher
$S_4$

Fig. 9

$S_3$ (10)

$_j b_{s,m}$    $m = 1$ bis $M$

$m = $ | 1 | 2 | 3 | 4 | 5 | 6 | 7 | 8    21

$m = $ | 3 | 4 | 5 | 6 | 7 | 8    22

$_{j-1} \overline{b}_{s,m}$

$m = n+1$ bis $M$

Integrations-
Speicher
$S_4$ (13)

23

$m = $ | 1 | 2 | 3 | 4 | 5 | 6 | 7 | 8    $_j \overline{b}_{s,m}$

$m = n+1$ bis $M$

24

25    $^1/_r$    26

$m = $ | 1 | 2    27

$P_3$

$_j \overline{\overline{b}}_{s,m}$    $m = 1$ bis $n$

Massen-Speicher (11)

Fig. 10

26

*Fig. 11*

EP 0 308 932 B1

Fig. 12

Abtastrichtung

$\Delta \omega_x = \Delta \omega_{y\,min}$

$B_x \hat{=} \Delta t_M$

$B_n \hat{=} \Delta T_M$

$B_M \hat{=} T_M$

$B_E$

$E_{min} = h$

$E = \dfrac{h}{cos\omega}$

$E_{max}$

X

Y

EP 0 308 932 B1

Fig.13

Fig.14

Fig.15

Fig.16

Fig.17